(19) Europäisches Patentamt European Patent Office Office européen des brevets

(11) **EP 2 291 038 A1**

(12) **EUROPEAN PATENT APPLICATION**
published in accordance with Art. 153(4) EPC

(43) Date of publication:
**02.03.2011 Bulletin 2011/09**

(51) Int Cl.:
*H04W 52/20* (2009.01)       *H04W 52/10* (2009.01)

(21) Application number: **09750435.1**

(22) Date of filing: **07.04.2009**

(86) International application number:
**PCT/JP2009/057102**

(87) International publication number:
**WO 2009/142073 (26.11.2009 Gazette 2009/48)**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: **23.05.2008 JP 2008135564**

(71) Applicant: **NEC Corporation**
**Minato-ku**
**Tokyo 108-8001 (JP)**

(72) Inventors:
• **NIKI, Takeo**
  **Tokyo 108-8001 (JP)**
• **KITAJIMA, Tasuku**
  **Tokyo 108-8001 (JP)**

(74) Representative: **Glawe, Delfs, Moll**
**Patent- und Rechtsanwälte**
**Postfach 26 01 62**
**80058 München (DE)**

(54) **RADIO COMMUNICATION SYSTEM, BASE STATION, TERMINAL, RADIO COMMUNICATION METHOD, PROGRAM**

(57)    A radio communication system of the present invention includes a terminal and a base station. The terminal includes: an adjacent base station information report unit in which the base station and adjacent base stations report each other about its own power information; and an adjacent base station information delivery unit for delivering power information about the adjacent base stations to the terminal.

Fig. 5

**Description**

Technical Field

The present invention relates to a technique for controlling the transmission power of uplink data transmitted from a terminal to a base station.

Background Art

Recently, OFDMA (Orthogonal Frequency Division Multiple Access) scheme has attracted attention as a multiple access scheme for a radio communication system.

The OFDMA scheme is a scheme in which a frequency direction and a time direction are divided in sub-carriers and time slots, respectively, and a sub-carrier and a time slot, during which the sub-carrier can be used, are assigned to a data transmission source. The OFDMA scheme is adopted, for example, by WiMAX (Worldwide Interoperability for Microwave Access).

In the OFDMA scheme, the transmission power and the transmission timing at a terminal, and a frequency to be assigned to the terminal are adjusted between a base station and the terminal, in the case of uplink (UL). This adjustment is called ranging (Patent Document 1). Ranging is performed at the time of the initial entry to the base station by the terminal (for example, entry to a hand-over destination base station in the case of the terminal being handed-over) and is periodically performed afterwards.

In ranging of transmission power, among such rangings, the terminal assumes that the path loss of uplink and the path loss of downlink (DL) are almost the same, and calculates the transmission power of uplink data using information about the path loss of downlink. Such transmission power control is called open loop power control.

Now, the open loop power control in uplink will be described in detail.

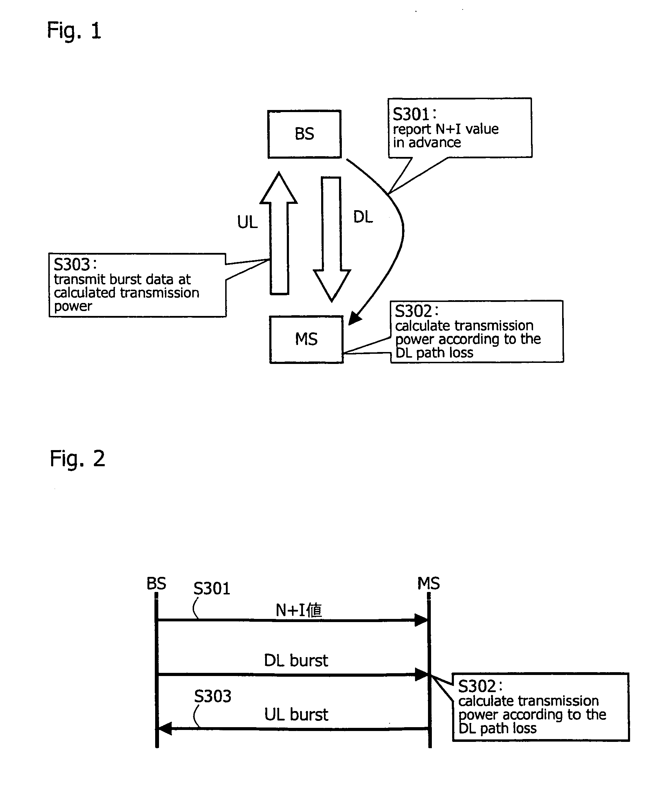

As shown in Figures 1 and 2, base station BS reports information about the transmission power of downlink data at base station BS itself and a CINR (Carrier to Interference plus Noise Ratio) value required for a modulation scheme at base station BS itself, in addition to the noise power and interference power (an N+I value) at base station BS itself, to terminal MS in advance, at step S301.

Here, the noise power is the power of thermal noise produced inside a receiver at base station BS itself, and the interference power is the power of disturbances (for example, a radio wave from an adjacent cell, jamming and the like) other than those at base station BS itself.

Next, terminal MS estimates the difference between the path losses of downlink and uplink on the basis of the difference between the CINR of downlink data (burst data) received from base station BS and the CINR required, and calculates the transmission power of uplink data from the path loss difference. As a result, the calculation formula for the transmission power is expressed as in the following equation 1.

[Equation 1]

$$P(dBm) = L + C/N + NI - 10\log10(R) + Offset\_MS_{perMS} + Offset\_BS_{perMS}$$

Here, L denotes downlink path loss estimated by terminal MS; C/N denotes a CINR value required for the modulation scheme at base station BS; NI denotes the noise power and interference power measured at base station BS; 10log10 (R) denotes the correction value of repetition coding; Offset_MS$_{perMS}$ denotes the correction value for each terminal MS; and Offset_BS$_{perMS}$ is the correction value for each base station BS.

After that, at step S303, terminal MS transmits uplink data (burst data) to base station BS at the transmission power calculated above.

However, the open loop power control in uplink has a problem in that terminal MS cannot correctly calculate the initial transmission power at the time of hand-over because noise power and interference power are different depending on each base station BS due to the difference of the radio environment.

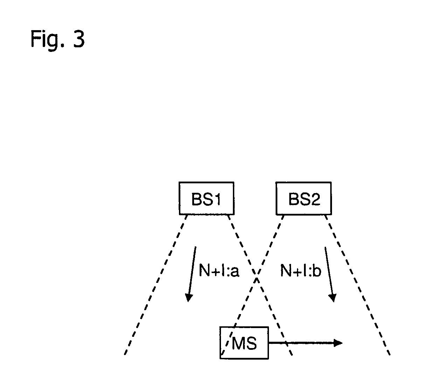

This problem will be described below in detail. Here, it is assumed that terminal MS is handed over from base station BS1 to base station BS2 as shown in Figure 3. It is also assumed that N+I values indicating the noise power and interference power at base stations BS1 and BS2 are "a" and "b", respectively.

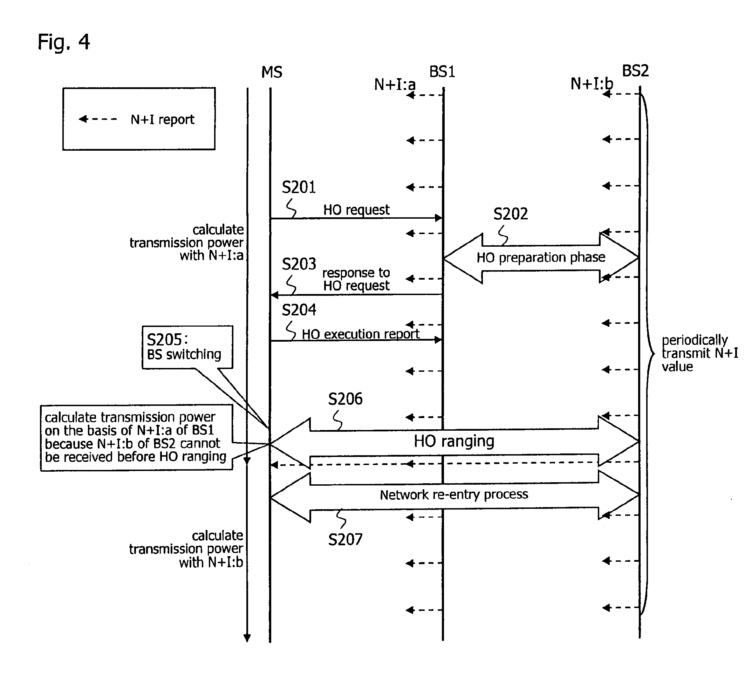

As shown in Figure 4, base station BS1 performs periodic transmission in which the N+I value "a" is periodically inserted into a downlink frame and broadcast-transmitted to terminals MS that are under its own jurisdiction.

On the other hand, base station BS2 similarly perform periodic transmission in which the N+I value "b" is periodically inserted into a downlink frame and broadcast-transmitted to terminals MS that are under its own jurisdiction.

Here, it is assumed that terminal MS transmits a hand-over request message with base station BS2 acting as a hand-over destination base station (a target BS), to base station BS1 which is the currently serving base station (a serving BS) at step S201.

Then, at step S202, a hand-over preparation phase is executed between base station BS1 and base station BS2.

At the hand-over preparation phase, base station BS1 performs a process for reporting information about terminal MS to be handed over, to base station BS2, and base station BS2 performs a process for generating a data path to terminal MS, between base station BS2 and a higher network (an access service network in the case of WiMAX).

When the hand-over preparation phase is completed, base station BS 1 transmits, a hand-over request response message to the hand-over request message, to terminal MS at step S203, and terminal MS transmits a hand-over execution notification message to base station BS1 at step S204.

After that, terminal MS performs switching from base station BS1 to base station BS2 at step S205, and executes ranging between terminal MS and base station BS2 at step 206. This ranging, in particular, is called hand-over ranging.

After that, a network re-entry process is furthermore executed between terminal MS and base station BS2 at step S207.

In the network re-entry process, base station BS2 performs a process for causing terminal MS to re-enter the higher network (an access service network in the case of WiMAX) via base station BS2 itself.

However, terminal MS does not receive the N+I value "b" from base station BS2 until hand-over ranging is started at step S206 after switching to base station BS2 is performed at step S205 and does not know the N+I value b.

Therefore, terminal MS has to use the N+I value "a" of base station BS1 when calculating the initial transmission power of uplink data by using the equation 1 in hand-over ranging.

In this case, the initial transmission power is different by (a-b) from transmission power calculated with the use of the N+I value "b" that is received later from base station BS2 in ranging periodically performed afterwards. Therefore, the initial transmission power calculated in hand-over ranging is not a value that has been correctly calculated.

Patent Document 1: JP2006-005946A

Summary of the Invention

Therefore, the object of the present invention is to provide a radio communication system, base station, terminal, radio communication method and program, capable of solving the above problem.

A radio communication system of the present invention is a radio communication system configured to comprise a terminal and a base station, wherein the base station comprises:

a report unit in which the base station and adjacent base stations report each other about its own power information; and a delivery unit for delivering power information about the adjacent base stations to the terminal.

A base station of the present invention comprises:

a report unit in which the base station and adjacent base stations report each other about its own power information; and a delivery unit for delivering power information about the adjacent base stations to a terminal.

A terminal of the present invention comprises:

an extraction unit for extracting power information about a hand-over destination base station from among the power information about adjacent base stations delivered from a serving base station.

A first radio communication method of the present invention is a radio communication method performed by a base station, the method comprising:

a reporting step in which the base station and adjacent base stations report each other about its own power information; and a delivery step of delivering power information about the adjacent base stations to a terminal.

A second radio communication method of the present invention is a radio communication method performed by a terminal, the method comprising:

an extraction step of extracting power information about a hand-over destination base station from among the power information about adjacent base stations delivered from a serving base station.

A first program of the present invention causes a base station to execute:

a reporting procedure in which the base station and adjacent base stations report each other about its own power information; and

a delivery procedure for delivering power information about the adjacent base stations to a terminal.

A second program of the present invention causes a terminal to execute:

an extraction procedure for extracting power information about a hand-over destination base station from among the power information about adjacent base stations delivered from a serving base station.

According to the present invention, a base station and adjacent base stations report each other about its own power information and the base station delivers power information about the adjacent base stations to a terminal.

Thus, there is obtained an advantage in which, because a terminal can receive power information about adjacent base stations to be candidates for a hand-over destination, from a serving base station in advance, the terminal can correctly calculate the initial transmission power using power information about a hand-over destination base station received in advance, at the time of hand-over.

Brief Description of the Drawings

Figure 1 is a diagram illustrating open loop power control in uplink;

Figure 2 is a sequence diagram illustrating the open loop power control in uplink;

Figure 3 is a diagram illustrating an example of hand-over in a radio communication system;

Figure 4 is a sequence diagram illustrating an example of an operation performed at the time of hand-over in a related radio communication system;

Figure 5 is a diagram illustrating the configuration of a radio communication system of.an exemplary embodiment; and

Figure 6 is a sequence diagram illustrating an example of an operation performed at the time of hand-over in the radio communication system of the exemplary embodiment.

Best Mode for Carrying Out the Invention

An exemplary embodiment for practicing the present invention will be described below with reference to drawings.

In the exemplary embodiment below, description will be made concerning the case where a radio communication system is a WiMAX radio communication system, as an example. However, the present invention is not limited thereto.

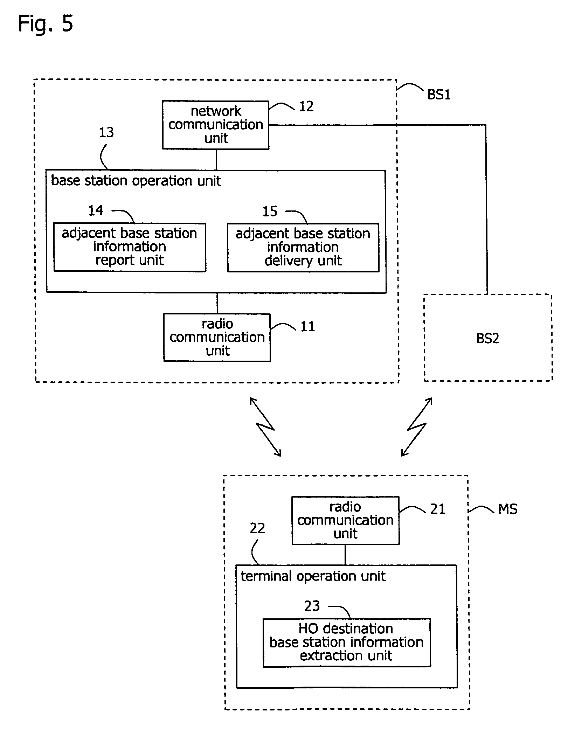

As shown in Figure 5, the radio communication system of this exemplary embodiment includes base stations BS1 and BS2 and terminal MS. In Figure 5, the number of base stations BS and the number of terminals MS are assumed to be two and one, respectively, for simplification of description. However, the present invention is not limited thereto.

Base station BS1 includes radio communication unit 11, network communication unit 12 and base station operation unit 13. Base station BS2 also includes means similar to those of base station BS1 though they are not shown.

Radio communication unit 11 performs radio communication with terminal MS.

Network communication unit 12 performs network communication with other base stations BS via a network.

Base station operation unit 13 includes adjacent base station information report unit 14 and adjacent base station information delivery unit 15.

There is adjacent base station information report unit 14 in which base station BS1 and adjacent base stations report each other about its own power information.

It has been common for a base station and adjacent base stations, as described above, to report each other about information, such as the frequency band, preamble number and usable modulation scheme of the terminal itself, with adjacent base stations. However, adjacent base station information report unit 14 is characterized in that information about noise power and interference power at base station BS1 itself is added as information about base station BS1 itself in addition to the above information.

It is assumed that the report period by adjacent base station information report unit 14 is irregular. For example, it is conceivable that the start of mutual communication is triggered by base station BS1 itself being newly installed, or is triggered by changing the settings setting to be reported each other at base station BS1 itself. However, the present invention is not limited thereto.

Adjacent base station information delivery unit 15 delivers information about adjacent base stations to terminal MS.

It has been common to deliver information, such as the frequency bands, preamble numbers and usable modulation schemes of adjacent base stations, to terminal MS as described above. However, adjacent base station information delivery unit 15 is characterized in that information about noise power and interference power at the adjacent base stations is added as information about the adjacent base stations in addition to the above information.

It is assumed that the interval of delivery by adjacent base station information delivery unit 15 is irregular. For example, it is conceivable that start of delivery is triggered by mutual communication by adjacent base station information report unit 14. However, the present invention is not limited thereto.

In this exemplary embodiment, it is assumed that adjacent base station information delivery unit 15 broadcast-delivers an MOB NBR ADV (adjacent base station information) message including information about noise power and interference power at adjacent base stations, to terminals MS that are under its own jurisdiction.

In addition, base station operation unit 13 includes means similar to those of a base station generally used in a WiMAX radio communication system though they are not shown. For example, this means includes the means for periodically transmitting noise power and interference power at base station BS1 itself to terminal MS, means for transmitting/receiving various messages to/from terminal MS, means for executing the hand-over preparation phase with other base stations BS, means for executing ranging with terminal MS, means for executing the network re-entry process with terminal MS, and the like in Figure 4. However, since these means are not an essential part of the present invention and are well known, detailed description thereof will be omitted.

As shown in Figure 5, terminal MS includes radio communication unit 21 and terminal operation unit 22.

Radio communication unit 21 performs radio communication with base stations BS1 and BS2.

Terminal operation unit 22 includes hand-over destination base station information extraction unit 23.

Hand-over destination base station information extraction unit 23 extracts information about a hand-over destination base station from among adjacent base station information delivered from a serving base station, at the time of hand-over.

In addition, terminal operation unit 22 includes means similar to those of a terminal generally used in a WiMAX radio communication system though they are not shown. For example, this means includes the means for transmitting/receiving various messages to/from serving base station BS, means for calculating transmission power of uplink data at the time of ranging, and the like in Figure 4. Hand-over destination base station information extraction unit 23 can hand over extracted information about a hand-over destination base station, to the means for calculating transmission power. However, since these means are not an essential part of the present invention and are well known, detailed description thereof will be omitted.

The operation of the radio communication system of this exemplary embodiment performed at the time of hand-over will be described below. Here, it is assumed that terminal MS is handed over from base station BS 1 to base station BS2 as shown in Figure 3. It is also assumed that N+I values that indicate the noise power and interference power at base stations BS1 and BS2 are "a" and "b", respectively.

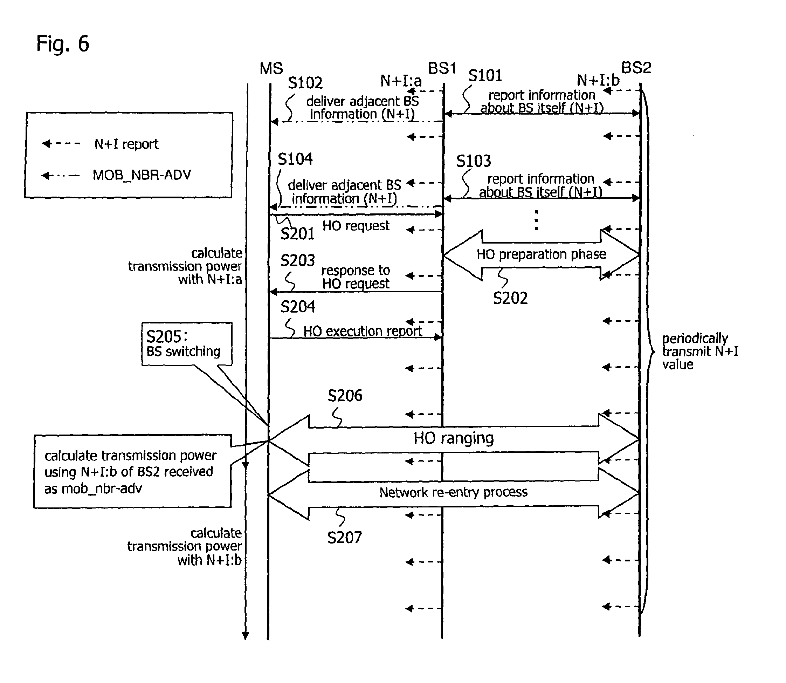

As shown in Figure 6, base stations BS1 and BS2 execute periodic transmission of the N+I values "a" and "b", respectively.

Here, it is assumed that, for example, a setting that is to be reported each other is changed at any one of base stations BS1 and BS2, and it triggers start of mutual communication. Then, adjacent base station information report units 14 of base stations BS1 and BS2 report each other about the N+I values and the like of base stations BS and BS2 themselves, respectively, at step S101.

Furthermore, for example, it is assumed that mutual communication by adjacent base station information report unit 14 triggers start of delivery. Then, adjacent base station information delivery unit 15 of base station BS1 broadcast-delivers an MOB NBR ADV message including information such as the N+I value "b" at adjacent base station BS2, to terminals MS that are under its own jurisdiction at step S102.

At steps S 103 and S104 also, the MOB NBR ADV message including the information such as the N+I value "b" at base station BS2 is delivered from base station BS 1 to terminal MS similarly to the above steps S101 and S102.

It is assumed that terminal MS, after that, performs switching to base station BS 2 at step S205 after the process of steps S201 to S204, and starts hand-over ranging at step S206.

In this case, terminal MS cannot directly receive the N+I value "b" from base station BS2 until hand-over ranging is started at step S206 after switching to base station BS2 is performed at step S205.

However, terminal MS has already received the N+I value "b" of base station BS2 by the MOB NBR ADV messages at Steps S102 and S104.

Therefore, terminal MS can extract the N+I value "b" of base station BS2 by hand-over destination base station information extraction unit 23 in hand-over ranging and correctly calculate the initial transmission power using the extracted N+I value "b".

As described above, in this exemplary embodiment, base station BS and adjacent base stations BS report each other about information about noise power and interference power, and base station BS delivers information about noise power and interference power at the adjacent base stations BS to terminal MS.

Therefore, since terminal MS can receive information about noise power and interference power at adjacent base stations BS that are to be candidates for a hand-over destination from serving base station MS in advance, terminal MS can correctly calculate the initial transmission power using information about noise power and interference power of a hand-over destination base station BS received in advance, at the time of hand-over.

The methods performed at base station BS and terminal MS of the present invention, respectively, may be applied to a program to be executed by a computer. It is possible to store the program into a storage medium, and it is also possible to provide the program to the outside via a network.

The present invention has been described with reference to an exemplary embodiment. However, the present invention is not limited to the above exemplary embodiment. Various modifications understandable to one skilled in the art can be made in the configuration and details of the present invention within the range of the present invention.

This application claims priority based on Japanese Patent Application No. 2008-135564 filed on May 23, 2008, the disclosure of which is hereby incorporated by reference thereto in its entirety.

## Claims

1. A radio communication system configured to comprise a terminal and a base station, wherein
   the base station comprises:

   a report unit in which the base station and adjacent base stations report each other about its own power information; and
   a delivery unit for delivering power information about the adjacent base stations to the terminal.

2. The radio communication system according to claim 1, wherein
   the delivery unit delivers a message including the power information about the adjacent base stations to the terminal.

3. The radio communication system according to claim 2, wherein
   the delivery unit broadcast-delivers the message to terminals that are under its own jurisdiction as an adjacent base station information message.

4. The radio communication system according to any one of claims 1 to 3, wherein
   the terminal comprises an extraction unit for extracting power information about a hand-over destination base station from among the power information about adjacent base stations delivered from a serving base station.

5. The radio communication system according to any one of claims 1 to 4, wherein
   the power information is information about noise power and interference power.

6. A base station comprising:

   a report unit in which the base station and adjacent base stations report each other about its own power information; and
   a delivery unit for delivering power information about the adjacent base stations to a terminal.

7. The base station according to claim 6, wherein
   the delivery unit delivers a message including the power information about the adjacent base stations to the terminal.

8. The base station according to claim 7, wherein
   the delivery unit broadcast-delivers the message to terminals that are under its own jurisdiction as an adjacent base station information message.

9. The base station according to any one of claims 6 to 8, wherein
   the power information is information about noise power and interference power.

10. A terminal comprising an extraction unit for extracting power information about a hand-over destination base station from among the power information about adjacent base stations delivered from a serving base station.

11. The terminal according to claim 10, wherein

the power information is information about noise power and interference power.

**12.** A radio communication method performed by a base station, the method comprising:

a reporting step in which the base station and adjacent base stations report each other about its own power information; and
a delivery step of delivering power information about the adjacent base stations to a terminal.

**13.** The radio communication method according to claim 12, wherein
at the delivery step, a message including the power information about the adjacent base stations is delivered to the terminal.

**14.** The radio communication method according to claim 13, wherein
at the delivery step, the message is broadcast-delivered to terminals that are under its own jurisdiction as an adjacent base station information message.

**15.** The radio communication method according to any one of claims 12 to 14, wherein the power information is information about noise power and interference power.

**16.** A radio communication method performed by a terminal, the method comprising:

an extraction step of extracting power information about a hand-over destination base station from among the power information about adjacent base stations delivered from a serving base station.

**17.** The radio communication method according to claim 16, wherein
the power information is information about noise power and interference power.

**18.** A program causing a base station to execute:

a reporting procedure in which the base station and adjacent base stations report each other about its own power information; and
a delivery procedure for delivering power information about the adjacent base stations to a terminal.

**19.** The program according to claim 18, wherein
in the delivery procedure, a message including the power information about the adjacent base stations is delivered to the terminal.

**20.** The program according to claim 19, wherein
in the delivery procedure, the message is broadcast-delivered to terminals that are under its own jurisdiction as an adjacent base station information message.

**21.** The program according to any one of claims 18 to 20, wherein
the power information is information about noise power and interference power.

**22.** A program causing a terminal to execute:

an extraction procedure for extracting power information about a hand-over destination base station from among the power information about adjacent base stations delivered from a serving base station.

**23.** The program according to claim 22, wherein
the power information is information about noise power and interference power.

## Fig. 1

S301:
report N+I value
in advance

BS

UL    DL

S303:
transmit burst data at
calculated transmission
power

MS

S302:
calculate transmission
power according to the
DL path loss

## Fig. 2

BS    S301                              MS

N+I值

DL burst

S303
UL burst

S302:
calculate transmission
power according to the
DL path loss

Fig. 3

## Fig. 4

calculate transmission power with N+I:a

S201
HO request

S202

HO preparation phase

S203
response to HO request

S204
HO execution report

S205:
BS switching

calculate transmission power on the basis of N+I:a of BS1 because N+I:b of BS2 cannot be received before HO ranging

S206

HO ranging

Network re-entry process

S207

calculate transmission power with N+I:b

◄ - - - N+I report

MS    BS1    BS2

N+I:a    N+I:b

periodically transmit N+I value

EP 2 291 038 A1

## Fig. 5

Fig. 6

| **INTERNATIONAL SEARCH REPORT** | International application No. |
|---|---|
| | PCT/JP2009/057102 |

A.   CLASSIFICATION OF SUBJECT MATTER
*H04W52/20*(2009.01)i, *H04W52/10*(2009.01)i

According to International Patent Classification (IPC) or to both national classification and IPC

B.   FIELDS SEARCHED

Minimum documentation searched (classification system followed by classification symbols)
H04W52/20, H04W52/10

Documentation searched other than minimum documentation to the extent that such documents are included in the fields searched
Jitsuyo Shinan Koho          1922-1996    Jitsuyo Shinan Toroku Koho    1996-2009
Kokai Jitsuyo Shinan Koho    1971-2009    Toroku Jitsuyo Shinan Koho    1994-2009

Electronic data base consulted during the international search (name of data base and, where practicable, search terms used)

C.   DOCUMENTS CONSIDERED TO BE RELEVANT

| Category* | Citation of document, with indication, where appropriate, of the relevant passages | Relevant to claim No. |
|---|---|---|
| A | JP 2008-514108 A  (LG Electronics Inc.),<br>01 May, 2008 (01.05.08),<br>Full text<br>& US 2006/0089161 A1    & US 2008/0056195 A1<br>& WO 2006/080676 A1    & KR 10-2006-0029587 A | 1-23 |
| A | WO 2006/107701 A2  (Interdigital Technology Corp.),<br>12 October, 2006 (12.10.06),<br>Full text<br>& JP 2008-535401 A       & US 2006/0276189 A1<br>& EP 1867181 A          & KR 10-2007-0121826 A<br>& KR 10-2008-0002905 A | 1-23 |

☐  Further documents are listed in the continuation of Box C.          ☐  See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 25 May, 2009 (25.05.09) | 02 June, 2009 (02.06.09) |

| Name and mailing address of the ISA/ | Authorized officer |
|---|---|
| Japanese Patent Office | |
| Facsimile No. | Telephone No. |

Form PCT/ISA/210 (second sheet) (April 2007)

13

**EP 2 291 038 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006005946 A

- JP 2008135564 A